# EUROPEAN PATENT SPECIFICATION

(11) **EP 2 667 568 B1**
(45) Date of publication and mention of the grant of the patent: **15.03.2017**
(21) Application number: 12169575.3
(22) Date of filing: 25.05.2012
(51) Int. Cl.: G06F 9/54, H04L 29/08, H04L 29/06

(54) **METHODS AND APPARATUSES FOR HANDLING DATA-RELATED REQUESTS**
VERFAHREN UND VORRICHTUNGEN ZUR HANDHABUNG DATENBEZOGENER ANFRAGEN
PROCÉDÉS ET DISPOSITIFS POUR LA GESTION DE DEMANDES ASSOCIÉES À DES DONNÉES

(43) Date of publication of application: 27.11.2013
(73) Proprietor: Telefonaktiebolaget LM Ericsson (publ), 164 83 Stockholm (SE)
(72) Inventor: Castellanos-Zamora, David, 117 63 Stockholm (SE)
(74) Representative: Boco IP Oy Ab

(56) References cited:
- US-A1- 2008 215 736
- US-A1- 2010 332 614
- "Digital cellular telecommunications system (Phase 2+); Universal Mobile Telecommunications System (UMTS); IP Multimedia Subsystem (IMS); Stage 2 (3GPP TS 23.228 version 8.4.0 Release 8); ETSI TS 123 228", IEEE, LIS, SOPHIA ANTIPOLIS CEDEX, FRANCE, vol. 3-SA2, no. V8.4.0, 1 April 2008 (2008-04-01), XP014041651, ISSN: 0000-0001

## Description

### Technical field

The present disclosure relates generally to methods and apparatuses in a Data Layered Architecture for routing and handling data-related requests in an architecture comprising multiple application servers using information from a common database.

### Background

Recently, an architecture has been developed for storing and accessing large amounts of data pertaining to subscribers and users in telecommunication networks, including both mobile and fixed networks, where a business logic and the actual data storage are implemented in separate layers. An example of such a type of architecture is applied to the 3GPP defined Home Subscriber Server, HSS, used to support the IP Multimedia Subsystem, IMS, and access in 4G mobile networks. The HSS also includes functionality of a Home Location Register, HLR, commonly used to support access in 2G and 3G mobile networks.

For example, the HSS/HLR is accessed by various nodes in the circuit-switched and packet-switched Evolved Packet Core, EPC and IMS network domains such as the Mobile Switching Centre, MSC, the Serving GPRS Support Node, SGSN, the Mobility Management Entity, MME, and the different nodes for Call Session Control Function, CSCF, respectively. All these nodes need to retrieve various information on their subscribers from the HSS/HLR in order to provide services to them. The following disclosure is however not limited to the examples of HSS/HLR.

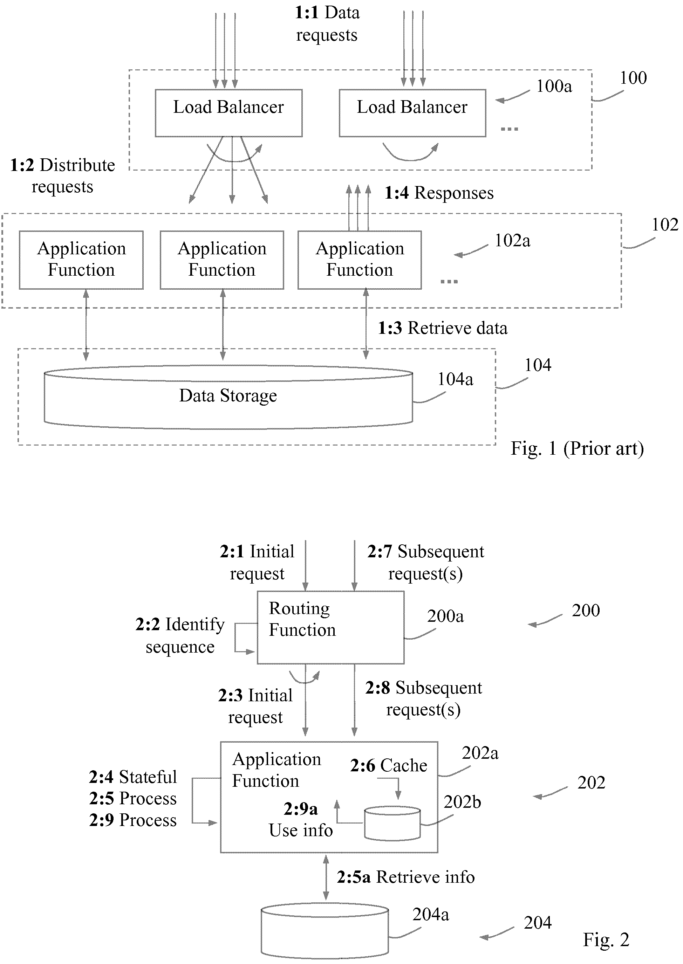

The layered database architecture referred to above can be schematically illustrated as shown in Fig. 1 and is considered to comprise a load distribution layer 100, an application layer 102 and a data layer 104. The data layer 104 is basically a data storage 104a for various subscriber data, which may be configured or implemented in different ways, e.g. with a single general database or with multiple individual databases at different locations which may store different types of data or data of different groups of subscribers, and so forth. The examples discussed in this description are basically independent of how the data layer 104 is configured or implemented as such in practice, and a single data storage is generally shown to represent the data layer 104 for simplicity.

The load distribution layer 100 includes a number of load balancing nodes 100a which are configured to receive requests for data, also known as "database queries", illustrated by an action 1:1, e.g. coming from any of the network nodes exemplified above which could also be referred to as "clients" or "requesting parties". Such requests will be referred to as "data-related requests" in the following description, implying that retrieval and usage of data from the database is required for processing the requests. Typically, a data-related request is, without limitation, a request for some data maintained in the data layer 104 for a subscriber, e.g. subscription settings, current location, current status, and so forth. Within this context, a data-related request could also be a request for a service that needs data from the database to be executed.

The load balancing nodes 100a are also configured to distribute the queries to a plurality of application functions 102a in the application layer 102, illustrated by another action 1:2, such that the load on those application functions is distributed in a suitable manner so as to not overload any particular application function, i.e. preferably more or less evenly. The application functions 102a are configured to analyze and process the incoming data-related requests, including fetching needed data from the data storage 104a, illustrated by action 1:3, and to deliver responses to the requests in a suitable manner, illustrated by action 1:4. Sometimes, conversion, translation or other processing of the retrieved data is needed before a response is delivered.

The database architecture of Fig. 1 is sometimes referred to as a "Data Layered Architecture", DLA, or "User Data Convergence", UDC, e.g. according to terminology used by the 3<rd> Generation Partnership Project, 3GPP. The application functions 102a in the application layer 102 are sometimes also referred to as "application front-ends", although the term "application function" will be used throughout this description. Typically, the application functions 102a are uniformly configured and equipped to be capable of processing any type of queries when distributed from the load balancing nodes 100a. In other words, the load balancing nodes 100a can distribute any data-related request to any one of the uniform application functions 102a which generally do not maintain any user data or "states" according to this architecture, hence being stateless such that multiple requests related to a specific subscriber can be routed to different application functions 102a which all have access to the same data of that subscriber in the data storage 104a. This configuration provides for efficient usage of capacity in the application functions 102a by applying load balance operation on all incoming requests.

Although it is an advantage with the above-described database architecture of Fig. 1 that the load of processing incoming data-related requests can be evenly distributed among multiple uniform application functions all having access to the same information being stored in huge amounts in a common data layer, it is a problem that the processing of plural requests within a certain signalling process concerning a particular user may take considerable time. This may be caused by needing the same information regarding the user several times in order to process the requests relating to this user and such information must therefore be retrieved from the data layer more than once throughout the signalling process.

Moreover, the requests within the same signalling process are typically routed to different application functions, as described above, which must therefore retrieve the same data individually from the data layer, which obviously further contributes to the latency. Even if the different requests would be routed to the same application function at different points during the signalling process, it will still need to retrieve the same required data multiple times since the application function is stateless and thus "dataless". There is thus a certain latency or waiting time associated with each operation of retrieving data from the common data layer, adding up in the course of an executed signalling process.

WO 2006/107249 A1 discloses a solution for handling service requests in an application server comprising a load balancing unit and a set of equal traffic modules having the same ability to process service requests and to execute services. Contrary to the application functions 102a of Fig. 1, the traffic modules in this configuration normally operate in a stateful mode. In this solution, a load balancing function is applied for assigning any traffic module for processing an initial request of a session, while a port mapping function is applied to determine a specific traffic module for processing a subsequent request depending on a port number given in the latter request. The requesting party is required to have functionality to save the port number when received in an initial response and include it in any subsequent requests. Thereby, all requests within a particular session from the requesting party referring to this port number can be routed to the same traffic module which is associated with an internal network address of that traffic module having locally stored session data which has been established for the session and can be used by the traffic module for subsequent requests of that session.
US 2008/215736 A1 discloses a method for dynamically allocating an application server within an IP Multimedia Subsystem (IMS). A Serving Call/Session Control Function (S-CSCF) receives a user request and queries a central database to determine whether the user is allocated to an application server. If so, the S-CSCF forwards the request to the allocated application server. If the user is not already allocated to a server, the S-CSCF allocates the user to an application server and forwards the request to the newly allocated application server. The S-CSCF or the newly allocated application server sends a request to the central database to record the allocation.

### Summary

It is an object of embodiments described herein to address at least some of the problems and issues outlined above. In particular, it is an object to enable reduced delays associated with retrieval of user related information from a data layer for processing requests from a requesting party. It is possible to achieve these objects and others by using methods and apparatuses as defined in the attached independent claims.

According to one aspect, a method according to independent claim 1 is performed by a routing function of a Data Layered Architecture, DLA, for distributing data-related requests to an application layer of the DLA. The application layer comprises multiple application functions operating to process incoming data-related requests in a stateless and dataless mode and using information from a data layer of the DLA.

In this way, delays normally associated with retrieval of user related information from a data layer for processing multiple requests of an identified signalling sequence, can be reduced since the selected application function does not need to retrieve the same data from the data layer of the DLA more than once during the signalling sequence. It is also an advantage that no special functionality is required at the requesting party since the routing of subsequent requests to the selected application function is done by the routing function simply by recognizing that the subsequent requests belong to the same signalling sequence as the initial request.

According to another aspect, a routing function of a DLA is provided according to independent claim 5.

According to another aspect, a method according to independent claim 9 is performed by an application function in an application layer of a DLA, for handling data-related requests routed from a routing function of the DLA. The application layer comprises multiple application functions operating to process incoming data-related requests in a stateless and dataless mode and using information from a data layer of the DLA.

According to another aspect, an application function is provided in an application layer of a DLA according to independent claim 13. The application function is configured to handle data-related requests routed from a routing function of the DLA. The application layer comprises multiple application functions operating to process incoming data-related requests in a stateless and dataless mode and using information from a data layer of the DLA.

Additional advantageous aspects are set out in the dependent claims.

Further possible features and benefits of this solution will become apparent from the detailed description below.

### Brief description of drawings

The solution will now be described in more detail by means of exemplary embodiments and with reference to the accompanying drawings, in which:
Fig. 1 is a block diagram schematically illustrating a Data Layered Architecture and a procedure for handling data-related requests, according to the prior art.
Fig 2 is a block diagram illustrating a solution for handling data-related requests by using a routing function and an application function, according to some possible embodiments.
Figs 3a and 3b are flow charts illustrating procedures in a distribution layer and an application function, respectively, according to further possible embodiments.
Fig 4 is a signalling diagram illustrating an example of a signalling sequence when the solution is used in practice, according to further possible embodiments.
Fig. 5 is a block diagram illustrating a routing function of a distribution layer and an application function of an application layer in more detail, according to further possible embodiments.

### Detailed description

Briefly described, a solution is provided in a Data Layered Architecture, DLA, for distributing incoming data-related requests to an application layer of the DLA to be handled and processed by an application function, the requests concerning a particular user. As in the architecture described for Fig. 1, the application layer comprises multiple application functions configured to process incoming data-related requests in a stateless and dataless mode and using information from a data layer of the DLA. This solution is devised to enable effective and fast handling of multiple requests belonging to a particular signalling sequence, where the requests are handled by the same application function.

When the application function in this solution is selected, e.g. using a regular load balancing mechanism, to handle a received initial data-related request concerning a particular user, that application function switches from the stateless and dataless mode and temporarily operates in a stateful mode by caching data retrieved and used for processing the initial data-related request. When any incoming subsequent data-related request is recognized as belonging to the same signalling sequence as the initial request, the subsequent request is routed to the previously selected application function which can use the cached information, if needed, when processing the subsequent request.

Thereby, much time can be saved compared to conventional procedures since the selected application function does not need to retrieve the same data from the data layer of the DLA more than once. This can further be accomplished particularly without requiring any special functionality at the requesting party, apart from the regular procedures already used, since the routing of subsequent requests to the selected application function is done simply by recognizing that they belong to the same signalling sequence as the initial request. It is even possible for the application function to retrieve anticipated user related information, needed for processing a forthcoming data-related request which is known within the identified signalling sequence, from the data layer and pre-cache the anticipated information before actually receiving the forthcoming data-related request. Some useful examples of employing the solution will be described in more detail below.

A possible procedure and scenario for handling data-related requests by using a routing function and an application function, will now be described with reference to the block diagram in Fig. 2. This procedure and scenario may be applied to the Data Layered Architecture, DLA, shown in Fig. 1, in this example comprising a load distribution layer 200 where a routing function 200a is implemented, an application layer 202 where an application function 202a is implemented, and a data layer 204 where a data storage 204a is implemented.

It should be noted that the routing function 200a of this solution should be seen as a logic function that could be implemented in one or more load balancing nodes or entities, e.g. such as those illustrated in Fig. 1 by numeral 100a. It may thus happen in the embodiments described below, referring to Figs 2-5, that different requests are received and routed by different load balancing nodes or entities, or the requests may instead be received and routed by the same load balancing node, depending on how the distribution layer is configured in practice. However, for simplicity in the following description, all incoming requests are assumed to be handled by the same routing function entity.

The application function 202a is normally operating to process incoming data-related requests in a stateless and dataless mode and using information from the data layer 204. As in Fig. 1, the application layer 202 comprises multiple further similar application functions, not shown, which may basically have the same abilities and functionality as the shown application function 202a, although the solution is not limited thereto. The routing function 200a may apply a suitable load balancing mechanism for selecting one of the application functions in the application layer 202 for processing incoming data-related requests.

A first **action 2:1** illustrates that an initial data-related request concerning a particular user and sent from a requesting party, is received at the routing function 200a. The term "initial" implies that the request is basically the first one of a particular signalling sequence, which request thus has not been preceded by any forgoing request in that signalling sequence. In a next **action 2:2,** the routing function 200a identifies the signalling sequence to which the initial data-related request belongs, and knowing this signalling sequence and what messages are normally communicated therein, one or more subsequent data-related requests concerning the same user can be accordingly anticipated within the signalling sequence.

The routing function 200a may also create, not shown here, suitable session information for the signalling sequence which information is associated with the user and the selected application function 202a. The session information is accordingly stored at the routing function 200a when receiving the initial data-related request which may be received from a first peer of the requesting party. If a subsequent data-related request of the signalling sequence is received from a second peer of the requesting party, the subsequent request can be routed to the selected application function based on the stored session information, which is also valid when both the initial and subsequent requests are received from the same peer as well.

Returning to the process of Fig. 2, the routing function 200a further routes the initial data-related request, in a further **action 2:3,** to the application function 202a in the application layer 202, which is somehow selected amongst the multiple application functions in the application layer 202, e.g. using a load balancing mechanism as schematically indicated by a curved arrow. The operation as such of selecting a suitable routing function to handle the initial request is however somewhat outside this solution.

When received at the selected application function 202a, the initial data-related request triggers the application function 202a to temporarily operate in a stateful mode by caching data used for processing the initial data-related request. An **action 2:4** illustrates that the application function 202a switches from stateless mode to stateful mode for handling requests within the identified signalling sequence. In this respect, the identified signalling sequence may be explicitly indicated by the routing function 200a in a suitable manner when forwarding the initial request, or the signalling sequence may be recognized and identified by the application function 202a itself.

The application function 202a then processes the initial data-related request accordingly, as shown by an **action 2:5,** which processing includes retrieving needed user related information from the data storage 204a in the data layer 204, as shown by an **action 2:5a,** and using the retrieved information for processing the initial data-related request. A further **action 2:6** illustrates that the application function 202a also caches at least some of the retrieved user related information in a local cache memory 202b at the application function 202a.

At some point later during the course of the identified and ongoing signalling sequence, the routing function 200a receives one or more subsequent data-related requests, as indicated by an **action 2:7,** which is/are recognized as belonging to the same signalling sequence. As a result, the routing function 200a routes the one or more subsequent data-related requests to the previously selected application function 202a, as shown by another **action 2:8.** A further **action 2:9** illustrates that the application function 202a processes the subsequent request(s) accordingly, which processing may include using any needed user related information, as shown by an **action 2:9a,** that was cached in the local cache memory 202b in action 2:6.

In this way, the requests received from the requesting party can be processed in an efficient manner by one and the same application function 202a, since any needed user related information can be retrieved no more than once from the data storage 204a in the data layer 204. This solution does not require that any session specific data or information, such as a port number or the like, is extracted from a response to the initial request and referenced in the subsequent requests by the requesting party, to ensure that the subsequent requests will be routed to the same application function. In contrast, the subsequent requests are instead recognized as belonging to the ongoing signalling sequence without requiring that the requesting party must add any particular indication to the requests.

The solution can further be used for any recognizable signalling sequences involving any communication protocol including Diameter, Mobile Application Part (MAP), Radious, Session Initiation Protocol (SIP), and Simple Object Access Protocol (SOAP), as well as various procedures for mobility management, IMS registration, and so forth. An illustrative but non-limiting example will be described later below where the solution is used in the context of an IMS registration procedure.

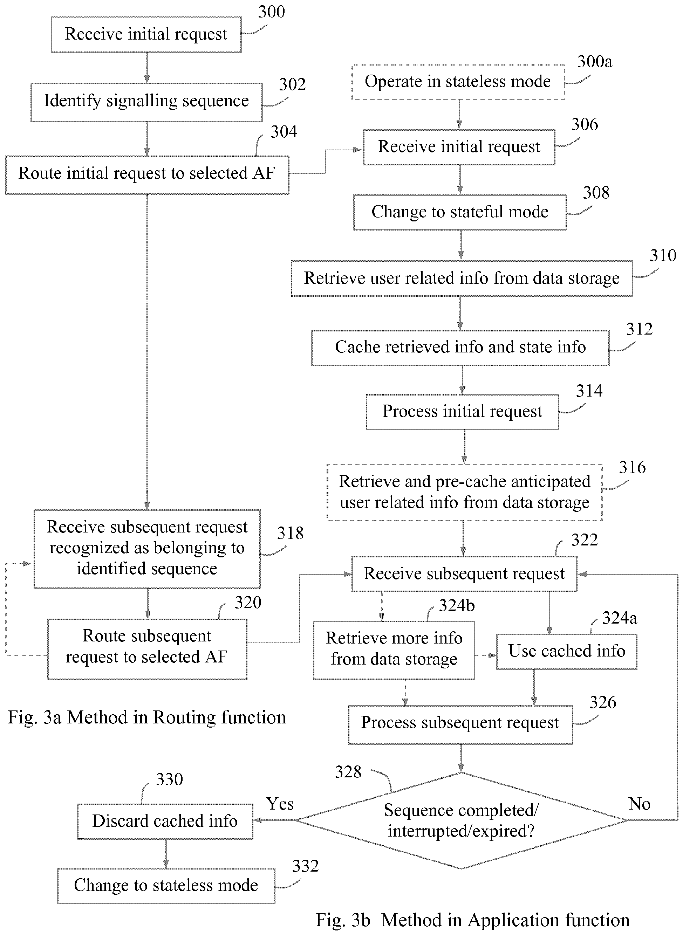

A somewhat more detailed example of how procedures can be executed in a routing function of a distribution layer and in an application function of an application layer, respectively, of a Data Layered Architecture, DLA, will now be described with reference to the flow charts in Fig. 3a and 3b. It is assumed that the application layer comprises multiple application functions operating to process incoming data-related requests in a stateless and dataless mode and using information from a data layer of the DLA. The routing function of this embodiment corresponds to routing function 200a of Fig. 2 and is basically configured to distribute data-related requests to the application layer, while the application function of this embodiment corresponds to application function 202a of Fig. 2 and is configured to handle the data-related requests routed from the routing function.

In a first **action 300,** the routing function receives an initial data-related request concerning a particular user and sent from a requesting party, basically corresponding to action 2:1 in Fig. 2. Another **action 300a** further indicates that the application function is currently operating in a normal stateless and dataless mode. The routing function then identifies a signalling sequence of the received initial data-related request wherein one or more subsequent data-related requests concerning the user are anticipated within the identified signalling sequence, in another **action 302,** basically corresponding to action 2:2 in Fig. 2. At this point, the routing function may also create and store session information for the signalling sequence associated with the user and the application function, as mentioned above when describing Fig. 2.

A next **action 304** illustrates that the routing function routes the initial data-related request to the application function being selected in the application layer for processing the initial request, basically corresponding to action 2:3 in Fig. 2. Another **action 306** further indicates that the application function receives the initial data-related request accordingly. Then, the initial data-related request triggers the application function to temporarily operate in a stateful mode, and a further **action 308** illustrates that the application function changes temporarily from the stateless mode to the stateful mode, basically corresponding to action 2:4 in Fig. 2, for handling requests within the identified signalling sequence.

A next **action 310** illustrates that the application function retrieves user related information from the data layer, which is needed for processing the initial data-related request, basically corresponding to action 2:5a in Fig. 2. The application function further caches at least some of the retrieved user related information in a local cache memory, in another **action 312,** basically corresponding to action 2:6 in Fig. 2. A further **action 314** illustrates that the application function processes the initial data-related request, basically corresponding to action 2:5 in Fig. 2. It should be noted that actions 312 and 314 in Fig. 3, as well as the corresponding actions 2:5 and 2:6 in Fig. 2, of caching information and processing the request can be executed in any order and not necessarily in the shown order. In addition, the application function may also create session-related state information for the signalling sequence, which state information is likewise cached, as indicated in action 312, and can be used later when processing any subsequent data-related requests.

Depending on the signalling sequence and requirements for processing the requests therein, the application function may need further user related information that must be retrieved accordingly from the data layer upon receiving further request(s) that can be foreseen and anticipated within the identified signalling sequence. Using this knowledge, the application function may also retrieve and "pre-cache" such anticipated user related information, which information will be needed for processing a forthcoming data-related request within the known signalling sequence, before the forthcoming data-related request is actually received. This possibility is illustrated as an optional **action 316.** In this way, the process of handling the requests within the identified signalling sequence can be executed with even less delay since the information will be already available at the application function when a request is received that requires that information.

A further **action 318** illustrates that the routing function receives a subsequent data-related request sent from the requesting party, which request is recognized as belonging to the identified signalling sequence, basically corresponding to action 2:7 in Fig. 2. As mentioned above, the initial and subsequent requests may in practice be received by different instances of the routing function which is described here as a single entity for simplicity. Having made the above recognition, the routing function then routes the subsequent data-related request to the selected application function, in another **action 320,** basically corresponding to action 2:8 in Fig. 2. When there are several instances of the routing function, all instances may have access to the previously stored session information associated with the user and the application function, to be able to recognize the ongoing signalling sequence. If further subsequent data-related requests are received within the signalling sequence, the process in the routing function may return to action 318 as shown by the dashed arrow.

Another **action 322** further indicates that the application function receives the subsequent data-related request accordingly. The application function may then perform one or both of an **action 324a** of using the information previously cached in action 312, and an **action 324b** of retrieving more user related information from the data layer, depending on what information is actually needed for processing the subsequent data-related request in a following **action 326,** basically corresponding to action 2:9 in Fig. 2. Thus, it may be sufficient to use the previously cached information for processing the subsequent request such that action 324b is not necessary. On the other hand, both previously cached information and further information retrieved from the data layer may be needed for processing the subsequent request such that both actions 324a and 324b must be performed. The retrieved further information may also be cached in the local cache memory for future use.

After performing action 326, the application function may further determine whether the identified and ongoing signalling sequence has ended or not, in an **action 328,** e.g. when the whole sequence has been completed, or when it has been interrupted for some reason, or when a preset timeout period has expired before the sequence has properly been completed. If it is determined that the signalling sequence has not ended yet according to any of the above alternatives, the process may return to action 322 where the application function receives another subsequent data-related request routed thereto from the routing function having repeated actions 318 and 320 accordingly.

If it is determined in action 328 that the identified signalling sequence has finally ended, e.g. finished, interrupted or expired, the application function may discard the cached information from the cache memory, in an **action 330,** and the stateful mode is changed to the stateless mode in an **action 332.** At this point, the routing function can also release the previously stored session information as well when detecting that the signalling sequence is completed, which can e.g. be recognized when the last request therein has been received and handled.

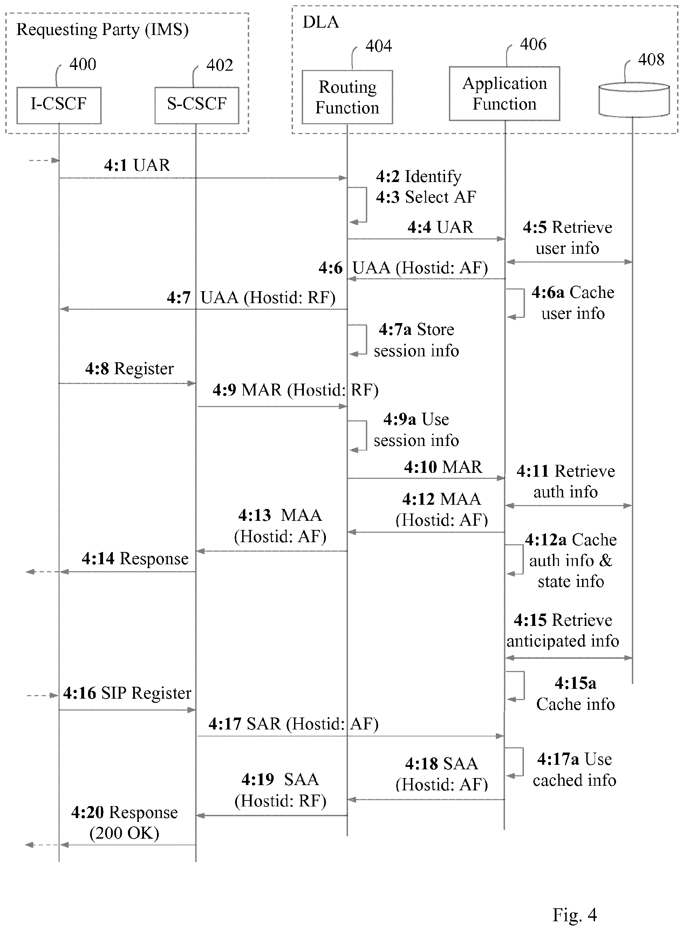

An example of how the solution can be used in practice in the context of a procedure of registering a user in an IMS network using the Diameter protocol, will now be described with reference to the signalling diagram in Fig. 4. This example involves an IMS system acting as the requesting party in terms of this solution. The IMS system comprises two familiar nodes called the Interrogating Call Session Control Function "I-CSCF" 400 and the Serving Call Session Control Function "S-CSCF" 402. As in the above examples, the DLA comprises a routing function 404 of a distribution layer, an application function 406 amongst a plurality of similar application functions of an application layer, and a data storage 408 of a data layer.

A user first activates some service in his/her user terminal which triggers a signalling sequence for registering the user in the IMS network, starting when a session activation message such as a "SIP Register" is sent from the terminal to the IMS system, indicated by a first dashed arrow, which message is received at the I-CSCF 400. In a first shown **action 4:1,** the I-CSCF 400 sends an initial data-related request concerning the user, which in this example is a standard Diameter message called "User Authorization Request", UAR. This message is first received and handled by the routing function 404 which identifies the signalling sequence of the initial UAR, in an **action 4:2,** and accordingly at least two subsequent data-related requests concerning the user can thereby be anticipated within this signalling sequence, to be described below.

A next **action 4:3** illustrates that the routing function 404 selects the application function 406 in the application layer, e.g. using a load balancing mechanism, and the initial UAR is accordingly routed to application function 406 in another **action 4:4.** The application function 406 then changes from the stateless and dataless mode to the stateful mode and processes the UAR which includes retrieving user related information from data storage 408 in the data layer in an **action 4:5.** The retrieved information is thus used for processing the UAR resulting in a response message called "User Authorization Answer", UAA which is first conveyed to the routing function 404 in an **action 4:6.** The UAA message from the application function 406 of action 4:6 has a host identity of the application function 406 (Hostid: AF). The application function 406 also caches the retrieved information, or at least some of it, in a local cache memory, in an **action 4:6a,** which can be done either before or after the caching action 4:6a.

The routing function 404 further forwards the UAA to the I-CSCF 400 in response to the UAR, in another **action 4:7,** where the host identity is changed from that of AF 406 to a host identity of the routing function 404 instead (Hostid: RF), which is normally done such that any subsequent request(s) will be directed by the requesting party to the routing function 404. In this example, the routing function 404 also stores session information, created for the signalling sequence and being associated with the user and the selected application function, in an action 4:7a. This may be done upon receiving the initial UAR from a "first peer" of the requesting party, in this case the I-CSCF 400 is thus the first peer.

In a following **action 4:8,** the I-CSCF 400 issues a register message to the S-CSCF 402, and the latter node will then act as a "second peer" of the requesting party by sending another standard Diameter message called "Mobile Authentication Request", MAR, in an **action 4:9,** hence being a subsequent data-related request of the ongoing signalling sequence. The MAR is addressed to the host identity of the routing function 404, as indicated. When receiving the MAR from the second peer, i.e. the S-CSCF 402, the routing function 404 is further able to use the stored session information in an **action 4:9a** and recognize that the MAR is a subsequent request belonging to the ongoing signalling sequence. The MAR is accordingly routed to the selected application function 406, in another **action 4:10.**

The application function 406 retrieves further user related information from data storage 408 in an **action 4:11,** in this case authentication information needed for processing the MAR. The application function 406 then conveys a response called "Mobile Authentication Answer", MAA to the routing function 404, in an **action 4:12.** The application function 406 also caches at least some of the newly retrieved information and also session-related state information created for the signalling sequence, in an **action 4:12a.** The cached session-related state information and other cached information can thereby be used when processing any further subsequent data-related requests. In this case, the original host identity of the application function 406 (Hostid: AF) is kept in the MAA when the routing function 404 forwards the MAA to the S-CSCF 402 as a response to the MAR, in an **action 4:13.** Accordingly, the S-CSCF 402 sends a suitable response message to the I-CSCF 400 based on the received MAA, shown as an **action 4:14,** in response to the register message of action 4:8.

A next **action 4:15** illustrates that the application function 406 also retrieves from the data layer anticipated user related information, which will be needed for processing a forthcoming data-related request that can be foreseen within the ongoing signalling sequence. Another **action 4:15a** illustrates that the application function 406 also pre-caches the anticipated information in its cache memory, that is before receiving the foreseen request, to be available when that request arrives without having to perform the time-consuming operation of retrieving it from the data layer after the request thus saving delay time.

Then, in an **action 4:16,** the I-CSCF 400 issues another register message to the S-CSCF 402, resulting in another standard Diameter message called "Server Assignment Request", SAR, sent from the S-CSCF 402 in an **action 4:17,** directly to the application function 406 as another subsequent data-related request of the ongoing signalling sequence. The SAR is thus addressed to the host identity of the application function 406, as indicated (Hostid: AF). When receiving the SAR from the S-CSCF 402, the application function 406 is further able to use the previously cached and anticipated information, and possibly any other previously cached information or parts thereof, in an **action 4:17a,** when processing the received SAR.

The application function 406 then conveys a response called "Server Assignment Answer", SAA to the routing function 404, in an **action 4:18.** and the routing function 404 forwards the SAA to the S-CSCF 402 as a response to the SAR, in an **action 4:19** where the host identity is changed from that of AF 406 to the host identity of the routing function 404 instead (Hostid: RF), according to the normal procedure. Finally, the S-CSCF 402 sends a suitable response message, in this case a message called "200 OK", to the S-CSCF 400 based on the received SAA, shown as an **action 4:20,** in response to the register message of action 4:16.

After the signalling sequence has been completed, e.g. when the application function 406 determines that the delivered response message SAA was the last message of the signalling sequence, any cached information related to that sequence can be discarded and deleted from the local cache memory and the stateful mode is changed back to the stateless mode, which was described in connection with actions 328 - 332 of Fig. 3 above. In a similar manner, the session information in the routing function is also released when it is detected that the signalling sequence is finished, interrupted or has expired.

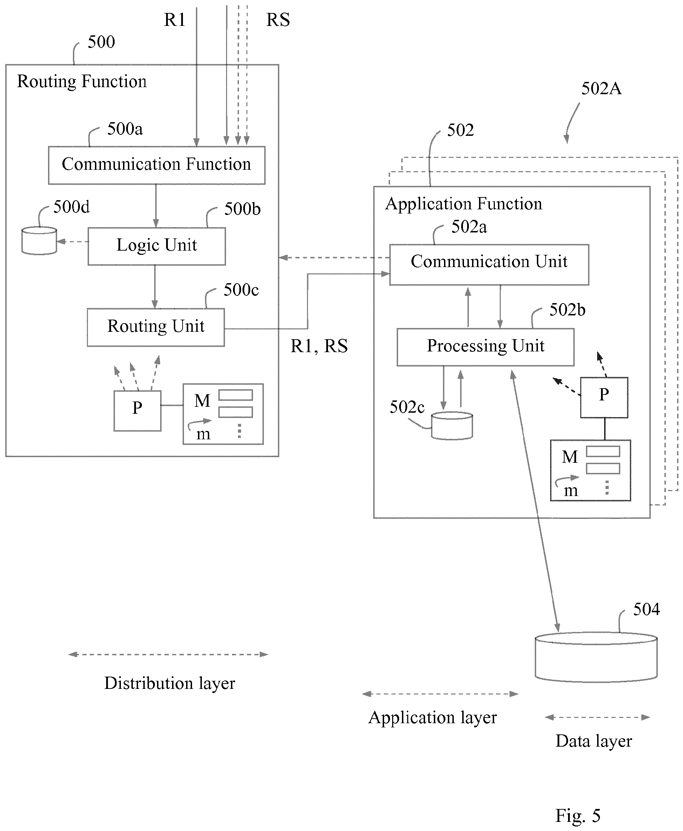

A detailed but non-limiting example of how a routing function and an application function can be configured to accomplish the above-described solution, is illustrated by the block diagram in Fig. 5. The routing function 500 is configured to distribute data-related requests to an application layer comprising multiple application functions 502A operating to process incoming data-related requests in a stateless and dataless mode, while the application function 502 is configured to handle data-related requests routed from the routing function 500, e.g. according to the procedures described above for any of Figs 2-4, respectively.

The routing function 500 and the application function 502 will now be described, one by one, in terms of a possible example of employing the solution. It should be noted that the routing function 500 described here could be implemented in one or more instances, as also mentioned above, e.g. similar to the load balancing entities 100a of Fig. 1, and the solution is not limited in this respect.

The routing function 500 comprises a communication function 500a adapted to receive an initial data-related request "R1" concerning a particular user. The routing function 500 also comprises a **logic unit 500b** adapted to identify a signalling sequence of the initial data-related request wherein one or more subsequent data-related requests concerning the user are anticipated within the identified signalling sequence. The routing function 500 also comprises a **routing unit 500c** adapted to route the initial data-related request R1 to a selected application function in the application layer, in this case the shown application function 502, wherein the initial data-related request R1 triggers the selected application function 502 to temporarily operate in a stateful mode by caching information used for processing the initial data-related request R1.

The communication function 500a is further adapted to receive the one or more subsequent data-related requests "RS" which are recognized as belonging to the above signalling sequence. Further, the routing unit 500c is also adapted to route the one or more subsequent data-related requests RS to the selected application function 502, thereby enabling the application function 502 to use the cached information when processing the one or more subsequent data-related requests.

The application function 502 comprises a **communication unit 502a** adapted to receive from the routing function 500 the above-mentioned initial data-related request R1 concerning the particular user and being part of a signalling sequence wherein one or more subsequent data-related requests concerning the user are anticipated within the signalling sequence. The application function 502 also comprises a **processing unit 502b** adapted to change temporarily from the stateless mode to a stateful mode for handling requests within the signalling sequence. The processing unit 502b is further adapted to retrieve from the data layer 504 user related information used for processing the initial data-related request R1, and to cache at least some of the retrieved user related information in a local cache memory 502c.

The communication unit 502a is further adapted to receive from the routing function 500 the one or more subsequent data-related requests RS which are recognized as belonging to the signalling sequence. Also, the processing unit 502b is further adapted to use the cached information from the cache memory 502c when processing the one or more subsequent data-related requests. The communication unit 502a may be further adapted to provide suitable responses to the routing function to be forwarded to the requesting party, not shown.

The above routing function 500 and its functional units 500a-c may be configured or adapted to operate according to various optional embodiments. In a possible embodiment, when a response to the initial data-related request is received from the selected application function, the communication function 500a may be further adapted to keep a Host Identity of the selected application function in the response when forwarding the response to the requesting party. Thereby, the requesting party is enabled to send a subsequent data-related request directly to the selected application function.

In another possible embodiment, the logic unit 500b may be further adapted to store session information 500d, created for the signalling sequence and being associated with the user and the selected application function, when receiving the initial data-related request from a first peer of the requesting party. In that case, the routing unit 500c is further adapted to route a subsequent data-related request of the signalling sequence, received from a second peer of the requesting party or from the first peer, to the selected application function based on the stored session information. The logic unit 500b may be further adapted to release the above session information in the routing function when detecting that the signalling sequence is finished, interrupted or has expired.

The above application function 502 and its functional units 502a-b may be configured or adapted to operate according to various optional embodiments. In a possible embodiment, the processing unit 502b may be further adapted to retrieve anticipated user related information, needed for processing a forthcoming data-related request within the signalling sequence, from the data layer and to pre-cache the anticipated user related information before receiving the forthcoming data-related request. Examples of this operation has been further described in connection with action 316 of Fig. 3 and actions 4:15, 4:15a of Fig. 4.

In another possible embodiment, the processing unit 502b may be further adapted to cache session-related state information created for the signalling sequence, and to use the session-related state information when processing the one or more subsequent data-related requests. The state information may be cached in the same cache memory 502c or elsewhere in the application function 502. The processing unit 502b may be further adapted to discard the cached information in the application function and change from the stateful mode to the stateless mode when the signalling sequence is finished, interrupted or has expired.

It should be noted that Fig. 5 illustrates various functional units in the routing function 500 and the application function 502 in a logical sense, and the skilled person is able to implement these functional units in practice using suitable software and hardware means. Thus, this aspect of the solution is generally not limited to the shown structures of the routing function 500 and the application function 502, and the functional units 500a-c and 502a-b may be configured to operate according to any of the features described in this disclosure, where appropriate.

The functional units 500a-c and 502a-b described above can be implemented in the routing function 500 and the application function 502, respectively, by means of program modules of a respective computer program comprising code means which, when run by processors "P" causes the routing function 500 and the application function 502 to perform the above-described actions. Each processor P may comprise a single Central Processing Unit (CPU), or could comprise two or more processing units. For example, each processor P may include general purpose microprocessors, instruction set processors and/or related chips sets and/or special purpose microprocessors such as Application Specific Integrated Circuits (ASICs). Each processor P may also comprise a storage for caching purposes.

Each computer program may be carried by a computer program product "M" in the routing function 500 and the application function 502, respectively, in the form of a memory having a computer readable medium and being connected to the processor P. Each computer program product M or memory thus comprises a computer readable medium on which the computer program is stored e.g. in the form of computer program modules "m". For example, the memory M may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the routing function 500 and the application function 502, respectively.

Some advantages that may be accomplished by the above-described solution include that the delays normally associated with retrieval of user related information from a data layer, needed for processing multiple requests of an identified signalling sequence, can be reduced since specific information needed for processing more than one request can be retrieved from the data layer just once during the signalling sequence. The delays can be further reduced by retrieving anticipated user related information from the data layer before an expected request is actually received according to the signalling sequence. Moreover, less resources will be occupied for the retrieval of such information as compared to conventional solutions.

While the solution has been described with reference to specific exemplary embodiments, the description is generally only intended to illustrate the inventive concept and should not be taken as limiting the scope of the solution. For example, the terms "application function", "routing function" and "data-related request" have been used throughout this description, although any other corresponding nodes, functions, and/or parameters could also be used having the features and characteristics described here. The solution is defined by the appended claims.

## Claims

1. A method performed by a routing function of a Data Layered Architecture, DLA, for distributing data-related requests to an application layer of the DLA, the application layer comprising multiple application functions operating to process incoming data-related requests in a stateless and dataless mode and using information from a data layer of the DLA, the method comprising:
- receiving (300) an initial data-related request concerning a particular user and sent from a requesting party, wherein the initial data-related request is a User Authorization Request,
- identifying (302) a signalling sequence of the initial data-related request wherein one or more subsequent data-related requests concerning the user are anticipated within said signalling sequence,
- routing (304) the initial data-related request to a selected application function in the application layer wherein the initial data-related request triggers the selected application function to temporarily operate in a stateful mode by caching information used for processing the initial data-related request which includes retrieving user related information from data storage (408),
- receiving (318) said one or more subsequent data-related requests sent from the requesting party which are recognized as belonging to said signalling sequence, and
- routing (320) the one or more subsequent data-related requests to the selected application function, thereby enabling the selected application function to use the cached information when processing the one or more subsequent data-related requests.

2. A method according to claim 1, wherein a response to the initial data-related request is received from the selected application function and a Host Identity of the selected application function is kept in the response when forwarding the response to the requesting party, thereby enabling the requesting party to send a subsequent data-related request directly to the selected application function.

3. A method according to claim 1, wherein session information, created for the signalling sequence and being associated with the user and the selected application function, is stored at the routing function when receiving the initial data-related request from a first peer of the requesting party, and wherein a subsequent data-related request of the signalling sequence, received from a second peer of the requesting party or from said first peer, is routed to the selected application function based on the stored session information.

4. A method according to claim 3, wherein said session information is released in the routing function when said signalling sequence is finished, interrupted or has expired.

5. A routing function (500) of a Data Layered Architecture, DLA, the routing function being configured to distribute data-related requests to an application layer of the DLA, the application layer comprising multiple application functions operating to process incoming data-related requests in a stateless and dataless mode and using information from a data layer of the DLA, the routing function comprising:
- a communication function (500a) adapted to receive an initial data-related request (R1) concerning a particular user, wherein the initial data-related request is a User Authorization Request,
- a logic unit (500b) adapted to identify a signalling sequence of the initial data-related request wherein one or more subsequent data-related requests concerning the user are anticipated within said signalling sequence, and
- a routing unit (500c) adapted to route the initial data-related request to a selected application function in the application layer wherein the initial data-related request triggers the selected application function to temporarily operate in a stateful mode by caching information used for processing the initial data-related request which includes retrieval of user related information from data storage (408),
wherein the communication function (500a) is further adapted to receive said one or more subsequent data-related requests (RS) which are recognized as belonging to said signalling sequence, and the routing unit (500c) is further adapted to route the one or more subsequent data-related requests to the selected application function, thereby enabling the selected application function to use the cached information when processing the one or more subsequent data-related requests.

6. A routing function according to claim 5, wherein when a response to the initial data-related request is received from the selected application function, the communication function (500a) is further adapted to keep a Host Identity of the selected application function in the response when forwarding the response to the requesting party, thereby enabling the requesting party to send a subsequent data-related request directly to the selected application function.

7. A routing function according to claim 5, wherein the logic unit (500b) is further adapted to store session information (500d), created for the signalling sequence and being associated with the user and the selected application function, when receiving the initial data-related request from a first peer of the requesting party, and wherein the routing unit (500c) is further adapted to route a subsequent data-related request of the signalling sequence, received from a second peer of the requesting party or from said first peer, to the selected application function based on the stored session information.

8. A routing function according to claim 7, wherein the logic unit (500b) is further adapted to release said session information in the routing function when said signalling sequence is finished, interrupted or has expired.

9. A method performed by an application function in an application layer of a Data Layered Architecture, DLA, for handling data-related requests routed from a routing function of the DLA, the application layer comprising multiple application functions operating to process incoming data-related requests in a stateless and dataless mode and using information from a data layer of the DLA, the method comprising:
- receiving (306) from the routing function an initial data-related request concerning a particular user and being part of a signalling sequence wherein one or more subsequent data-related requests concerning the user are anticipated within said signalling sequence, wherein the initial data-related request is a User Authorization Request,
- changing (308) temporarily from the stateless mode to a stateful mode for handling requests within said signalling sequence,
- retrieving (310) from the data layer user related information used for processing (314) the initial data-related request which includes retrieving user related information from data storage (408),
- caching (312) at least some of the retrieved user related information,
- receiving (322) from the routing function said one or more subsequent data-related requests recognized as belonging to said signalling sequence, and
- using (324a) the cached information when processing (326) the one or more subsequent data-related requests.

10. A method according to claim 9, wherein anticipated user related information, needed for processing a forthcoming data-related request within said signalling sequence, is retrieved from the data layer and pre-cached before receiving the forthcoming data-related request.

11. A method according to claim 9 or 10, wherein session-related state information created for the signalling sequence is cached and used when processing the one or more subsequent data-related requests.

12. A method according to any of claims 9-11, wherein the cached information is discarded (330) in the application function and the stateful mode is changed (332) to the stateless mode when said signalling sequence is finished, interrupted or has expired.

13. An application function (502) in an application layer of a Data Layered Architecture, DLA, the application function being configured to handle data-related requests routed from a routing function of the DLA, the application layer comprising multiple application functions (502A) operating to process incoming data-related requests in a stateless and dataless mode and using information from a data layer (504) of the DLA, the application function comprising:
- a communication unit (502a) adapted to receive from the routing function an initial data-related request (R1) concerning a particular user and being part of a signalling sequence wherein one or more subsequent data-related requests concerning the user are anticipated within said signalling sequence, wherein the initial data-related request is a User Authorization Request, and
- a processing unit (502b) adapted to change temporarily from the stateless mode to a stateful mode for handling requests within said signalling sequence, to retrieve from the data layer (504) user related information used for processing (314) the initial data-related request, which includes retrieval of user related information from data storage (408),
and to cache at least some of the retrieved user related information in a cache memory (502c),
wherein the communication unit (502a) is further adapted to receive from the routing function said one or more subsequent data-related requests (RS) recognized as belonging to said signalling sequence, and the processing unit (502b) is further adapted to use the cached information from the cache memory (502c) when processing (326) the one or more subsequent data-related requests.

14. An application function according to claim 13, wherein the processing unit (502b) is further adapted to retrieve anticipated user related information, needed for processing a forthcoming data-related request within said signalling sequence, from the data layer and to pre-cache the anticipated user related information before receiving the forthcoming data-related request.

15. An application function according to claim 13 or 14, wherein the processing unit (502b) is further adapted to cache session-related state information created for the signalling sequence, and to use the session-related state information when processing the one or more subsequent data-related requests.

16. An application function according to any of claims 13-15, wherein the processing unit (502b) is further adapted to discard the cached information in the application function and change from the stateful mode to the stateless mode when said signalling sequence is finished, interrupted or has expired.

## Patentansprüche

1. Verfahren, das von einer Routing-Funktion einer Datenschichtenarchitektur, DLA, zum Verteilen datenbezogener Anforderungen an eine Anwendungsschicht der DLA durchgeführt wird, die Anwendungsschicht umfassend vielfache Anwendungsfunktionen, die funktionieren, um eingehende datenbezogene Anforderungen in einem zustandslosen und datenlosen Modus zu verarbeiten, und Informationen von einer Datenschicht der DLA verwenden, das Verfahren umfassend:
- Erhalten (300) einer anfänglichen datenbezogenen Anforderung in Bezug auf einen spezifischen Benutzer und gesendet von einer anfordernden Seite, wobei die anfängliche datenbezogene Anforderung eine Benutzerberechtigungsanforderung ist,
- Identifizieren (302) einer Signalisierungssequenz der anfänglichen datenbezogenen Anforderung, wobei eine oder mehrere nachfolgende datenbezogene Anforderungen in Bezug auf den Benutzer in der Signalisierungssequenz vorweggenommen sind,
- Routen (304) der anfänglichen datenbezogenen Anforderung zu einer gewählten Anwendungsfunktion in der Anwendungsschicht, wobei die anfängliche datenbezogene Anforderung die ausgewählte Anwendungsfunktion auslöst, damit sie vorübergehend in einem zustandsbehafteten Modus durch Zwischenspeichern von Informationen funktioniert, die zum Verarbeiten der anfänglichen datenbezogenen Anforderung verwendet werden, was ein Abrufen benutzerbezogener Informationen vom Datenspeicher (408) enthält,
- Erhalten (318) der einen oder mehreren nachfolgenden datenbezogenen Anforderungen, die von der anfordernden Seite gesendet werden, die als zu der Signalisierungssequenz gehörend erkannt werden, und
- Routen (320) der einen oder mehreren nachfolgenden datenbezogenen Anforderungen zu der ausgewählten Anwendungsfunktion, wodurch der ausgewählten Anwendungsfunktion ermöglicht wird, die zwischengespeicherten Informationen beim Verarbeiten der einen oder mehreren nachfolgenden datenbezogenen Anforderungen zu verwenden.

2. Verfahren nach Anspruch 1, wobei eine Antwort auf die anfängliche datenbezogene Anforderung von der ausgewählten Anwendungsfunktion erhalten wird und eine Host-Identität der ausgewählten Anwendungsfunktion in der Antwort beibehalten wird, wenn die Antwort zu der anfordernden Seite weitergeleitet wird, wodurch der anfordernden Seite ermöglicht wird, eine nachfolgende datenbezogene Anforderung direkt an die ausgewählte Anwendungsfunktion zu senden.

3. Verfahren nach Anspruch 1, wobei Sitzungsinformationen, die für die Signalisierungssequenz erstellt wurden und mit dem Benutzer und der ausgewählten Anwendungsfunktion verbunden sind, bei der Routing-Funktion gespeichert werden, wenn die anfängliche datenbezogene Anforderung von einem ersten Peer der anfordernden Seite erhalten wird, und wobei eine nachfolgende datenbezogene Anforderung der Signalisierungssequenz, die von einem zweiten Peer der anfordernden Seite oder vom ersten Peer erhalten wird, beruhend auf den gespeicherten Sitzungsinformationen zu der ausgewählten Anwendungsfunktion geroutet wird.

4. Verfahren nach Anspruch 3, wobei die Sitzungsinformationen in der Routing-Funktion freigegeben werden, wenn die Signalisierungssequenz beendet bzw. unterbrochen wird oder abgelaufen ist.

5. Routing-Funktion (500) einer Datenschichtenarchitektur, DLA, wobei die Routing-Funktion konfiguriert ist, um datenbezogene Anforderungen an eine Anwendungsschicht der DLA zu verteilen, die Anwendungsschicht umfassend vielfache Anwendungsfunktionen, die funktionieren, um eingehende datenbezogene Anforderungen in einem zustandslosen und datenlosen Modus zu verarbeiten, und Verwenden von Informationen von einer Datenschicht der DLA, die Routing-Funktion umfassend:
- eine Kommunikationsfunktion (500a), die angepasst ist, um eine anfängliche datenbezogene Anforderung (R1) in Bezug auf einen spezifischen Benutzer zu erhalten, wobei die anfängliche datenbezogene Anforderung eine Benutzerberechtigungsanforderung ist,
- eine logische Einheit (500b), die angepasst ist, um eine Signalisierungssequenz der anfänglichen datenbezogenen Anforderung zu identifizieren, wobei eine oder mehrere nachfolgende datenbezogene Anforderungen in Bezug auf den Benutzer in der Signalisierungssequenz vorweggenommen sind, und
- eine Routing-Einheit (500c), die angepasst ist, um die anfängliche datenbezogene Anforderung zu einer gewählten Anwendungsfunktion in der Anwendungsschicht zu routen, wobei die anfängliche datenbezogene Anforderung die ausgewählte Anwendungsfunktion auslöst, damit sie vorübergehend in einem zustandsbehafteten Modus durch Zwischenspeichern von Informationen funktioniert, die zum Verarbeiten der anfänglichen datenbezogenen Anforderung verwendet werden, was ein Abrufen von benutzerbezogenen Informationen vom Datenspeicher (408) enthält,
wobei die Kommunikationsfunktion (500a) ferner angepasst ist, um die eine oder mehreren nachfolgenden datenbezogenen Anforderungen (RS) zu erhalten, die als zu der Signalisierungssequenz gehörend erkannt werden, und die Routing-Einheit (500c) ferner angepasst ist, um die eine oder mehreren nachfolgenden datenbezogenen Anforderungen zu der ausgewählten Anwendungsfunktion zu routen, wodurch der ausgewählten Anwendungsfunktion ermöglicht wird, die zwischengespeicherten Informationen beim Verarbeiten der einen oder mehreren nachfolgenden datenbezogenen Anforderungen zu verwenden.

6. Routing-Funktion nach Anspruch 5, wobei, wenn eine Antwort auf die anfängliche datenbezogene Anforderung von der ausgewählten Anwendungsfunktion erhalten wird, die Kommunikationsfunktion (500a) ferner angepasst ist, um eine Host-Identität der ausgewählten Anwendungsfunktion in der Antwort beizubehalten, wenn die Antwort zu der anfordernden Seite weitergeleitet wird, wodurch der anfordernden Seite ermöglicht wird, eine nachfolgende datenbezogene Anforderung direkt an die ausgewählte Anwendungsfunktion zu senden.

7. Routing-Funktion nach Anspruch 5, wobei die logische Einheit (500b) ferner angepasst ist, um Sitzungsinformationen (500d) zu speichern, die für die Signalisierungssequenz erstellt wurden und mit dem Benutzer und der ausgewählten Anwendungsfunktion verbunden sind, wenn die anfängliche datenbezogene Anforderung von einem ersten Peer der anfordernden Seite erhalten wird, und wobei die Routing-Einheit (500c) ferner angepasst ist, um eine nachfolgende datenbezogene Anforderung der Signalisierungssequenz, die von einem zweiten Peer der anfordernden Seite oder vom ersten Peer erhalten wird, beruhend auf den gespeicherten Sitzungsinformationen zu der ausgewählten Anwendungsfunktion zu routen.

8. Routing-Funktion nach Anspruch 7, wobei die logische Einheit (500b) ferner angepasst ist, um die Sitzungsinformationen in der Routing-Funktion freizugeben, wenn die Signalisierungssequenz beendet bzw. unterbrochen wird oder abgelaufen ist.

9. Verfahren, das von einer Anwendungsfunktion in einer Anwendungsschicht einer Datenschichtenarchitektur, DLA, zum Handhaben datenbezogener Anforderungen, die von einer Routing-Funktion der DLA geroutet werden, durchgeführt wird, die Anwendungsschicht umfassend vielfache Anwendungsfunktionen, die funktionieren, um eingehende datenbezogene Anforderungen in einem zustandslosen und datenlosen Modus zu verarbeiten, und Informationen von einer Datenschicht der DLA verwenden, das Verfahren umfassend:
- Erhalten (306) einer anfänglichen datenbezogenen Anforderung von der Routing-Funktion in Bezug auf einen spezifischen Benutzer und die Teil einer Signalisierungssequenz ist, wobei eine oder mehrere nachfolgende datenbezogene Anforderungen in Bezug auf den Benutzer in der Signalisierungssequenz vorweggenommen sind, wobei die anfängliche datenbezogene Anforderung eine Benutzerberechtigungsanforderung ist,
- Vorübergehendes Wechseln (308) von dem zustandslosen Modus in einen zustandsbehafteten Modus zum Handhaben von Anforderungen in der Signalisierungssequenz,
- Abrufen (310) benutzerbezogener Informationen von der Datenschicht, die zum Verarbeiten (314) der anfänglichen datenbezogenen Anforderung verwendet werden, was ein Abrufen benutzerbezogener Informationen vom Datenspeicher (408) enthält,
- Zwischenspeichern (312) von mindestens einigen der abgerufenen benutzerbezogenen Informationen,
- Erhalten (322) der einen oder mehreren nachfolgenden datenbezogenen Anforderungen von der Routing-Funktion, die als zu der Signalisierungssequenz gehörend erkannt werden, und
- Verwenden (324a) der zwischengespeicherten Informationen beim Verarbeiten (326) der einen oder mehreren nachfolgenden datenbezogenen Anforderungen.

10. Verfahren nach Anspruch 9, wobei vorweggenommene benutzerbezogene Informationen, die zum Verarbeiten einer bevorstehenden datenbezogenen Anforderung in der Signalisierungssequenz benötigt werden, von der Datenschicht abgerufen und vor Erhalten der bevorstehenden datenbezogenen Anforderung vorher zwischengespeichert werden.

11. Verfahren nach Anspruch 9 oder 10, wobei sitzungsbezogene Zustandsinformationen, die für die Signalisierungssequenz erstellt wurden, zwischengespeichert und beim Verarbeiten der einen oder mehreren nachfolgenden datenbezogenen Anforderungen verwendet werden.

12. Verfahren nach einem der Ansprüche 9-11, wobei die zwischengespeicherten Informationen in der Anwendungsfunktion verworfen (330) werden und der zustandsbehaftete Modus in den zustandslosen Modus gewechselt (332) wird, wenn die Signalisierungssequenz beendet bzw. unterbrochen wird oder abgelaufen ist.

13. Anwendungsfunktion (502) in einer Anwendungsschicht einer Datenschichtenarchitektur, DLA, wobei die Anwendungsfunktion konfiguriert ist, um datenbezogene Anforderungen zu handhaben, die von einer Routing-Funktion der DLA geroutet werden, die Anwendungsschicht umfassend vielfache Anwendungsfunktionen (502A), die betrieben werden, um eingehende datenbezogene Anforderungen in einem zustandslosen und datenlosen Modus zu verarbeiten, und Verwenden von Informationen von einer Datenschicht (504) der DLA, die Anwendungsfunktion umfassend:
- eine Kommunikationseinheit (502a), die angepasst ist, um von der Routing-Funktion eine anfängliche datenbezogene Anforderung (R1) in Bezug auf einen spezifischen Benutzer und die Teil einer Signalisierungssequenz ist, zu erhalten, wobei eine oder mehrere nachfolgende datenbezogene Anforderungen in Bezug auf den Benutzer in der Signalisierungssequenz vorweggenommen sind, wobei die anfängliche datenbezogene Anforderung eine Benutzerberechtigungsanforderung ist, und
- eine Verarbeitungseinheit (502b), die angepasst ist, um zum Handhaben von Anforderungen in der Signalisierungssequenz vorübergehend von dem zustandslosen Modus in einen zustandsbehafteten Modus zu wechseln, um von der Datenschicht (504) benutzerbezogene Informationen abzurufen, die zum Verarbeiten (314) der anfänglichen datenbezogenen Anforderung verwendet werden, was ein Abrufen von benutzerbezogenen Informationen vom Datenspeicher (408) enthält,
und um mindestens einige der abgerufenen benutzerbezogenen Informationen in einem Zwischenspeicher (502c) zu speichern,
wobei die Kommunikationseinheit (502a) ferner angepasst ist, um von der Routing-Funktion die eine oder mehreren nachfolgenden datenbezogenen Anforderungen (RS) zu erhalten, die als zu der Signalisierungssequenz gehörend erkannt wird, und die Verarbeitungseinheit (502b) ferner angepasst ist, um die zwischengespeicherten Informationen von dem Zwischenspeicher (502c) beim Verarbeiten (326) der einen oder mehreren nachfolgenden datenbezogenen Anforderungen zu verwenden.

14. Anwendungsfunktion nach Anspruch 13, wobei die Verarbeitungseinheit (502b) ferner angepasst ist, um vorweggenommene benutzerbezogene Informationen, die zum Verarbeiten einer bevorstehenden datenbezogenen Anforderung in der Signalisierungssequenz benötigt werden, von der Datenschicht abzurufen und um die vorweggenommenen benutzerbezogenen Informationen vor Erhalten der bevorstehenden datenbezogenen Anforderung vorher zwischenzuspeichern.

15. Anwendungsfunktion nach Anspruch 13 oder 14, wobei die Verarbeitungseinheit (502b) ferner angepasst ist, um sitzungsbezogene Zustandsinformationen zwischenzuspeichern, die für die Signalisierungssequenz erstellt wurden, und um die sitzungsbezogenen Zustandsinformationen beim Verarbeiten der einen oder mehreren nachfolgenden datenbezogenen Anforderungen zu verwenden.

16. Anwendungsfunktion nach einem der Ansprüche 13-15, wobei die Verarbeitungseinheit (502b) ferner angepasst ist, um die zwischengespeicherten Informationen in der Anwendungsfunktion zu verwerfen und vom zustandsbehafteten Modus in den zustandslosen Modus zu wechseln, wenn die Signalisierungssequenz beendet bzw. unterbrochen wird oder abgelaufen ist.

## Revendications

1. Procédé, mis en oeuvre par une fonction de routage d'une architecture en couches de données, DLA, de distribution de demandes associées à des données à une couche d'application de l'architecture DLA, la couche d'application comportant de multiples fonctions d'application opérant pour traiter des demandes entrantes associées à des données dans un mode sans état et sans données et utilisant des informations en provenance d'une couche de données de l'architecture DLA, le procédé comprenant les étapes ci-dessous consistant à :
- recevoir (300) une demande initiale associée à des données concernant un utilisateur particulier et envoyée à partir d'une partie demanderesse, dans lequel la demande initiale associée à des données est une demande d'autorisation d'utilisateur ;
- identifier (302) une séquence de signalisation de la demande initiale associée à des données, dans lequel une ou plusieurs demandes subséquentes associées à des données concernant l'utilisateur sont anticipées au sein de ladite séquence de signalisation ;
- acheminer (304) la demande initiale associée à des données vers une fonction d'application sélectionnée dans la couche d'application, dans lequel la demande initiale associée à des données déclenche la fonction d'application sélectionnée afin qu'elle opère temporairement dans un mode avec état, en mettant en mémoire cache des informations utilisées en vue de traiter la demande initiale associée à des données, ce qui inclut la récupération d'informations associées à l'utilisateur à partir d'un magasin de stockage de données (408) ;
- recevoir (318) ladite une ou lesdites plusieurs demandes subséquentes associées à des données envoyées à partir de la partie demanderesse, lesquelles sont reconnues comme appartenant à ladite séquence de signalisation ; et
- acheminer (320) ladite une ou lesdites plusieurs demandes subséquentes associées à des données vers la fonction d'application sélectionnée, ce qui permet par conséquent à la fonction d'application sélectionnée d'utiliser les informations mises en mémoire cache dans le cadre du traitement de ladite une ou desdites plusieurs demandes subséquentes associées à des données.

2. Procédé selon la revendication 1, dans lequel une réponse à la demande initiale associée à des données est reçue en provenance de la fonction d'application sélectionnée, et une identité d'hôte de la fonction d'application sélectionnée est conservée dans la réponse, lors de l'acheminement de la réponse vers la partie demanderesse, ce qui permet par conséquent à la partie demanderesse d'envoyer une demande subséquente associée à des données directement à la fonction d'application sélectionnée.

3. Procédé selon la revendication 1, dans lequel des informations de session, créées pour la séquence de signalisation, et qui sont associées à l'utilisateur et à la fonction d'application sélectionnée, sont stockées au niveau de la fonction de routage, lors de la réception de la demande initiale associée à des données en provenance d'un premier homologue de la partie demanderesse, et dans lequel une demande subséquente associée à des données de la séquence de signalisation, reçue en provenance d'un second homologue de la partie demanderesse ou en provenance dudit premier homologue, est acheminée vers la fonction d'application sélectionnée, sur la base des informations de session stockées.

4. Procédé selon la revendication 3, dans lequel lesdites informations de session sont libérées dans la fonction de routage lorsque ladite séquence de signalisation est terminée, interrompue ou a expiré.

5. Fonction de routage (500) d'une architecture en couches de données, DLA, la fonction de routage étant configurée de manière à distribuer des demandes associées à des données à une couche d'application de l'architecture DLA, la couche d'application comportant de multiples fonctions d'application opérant pour traiter des demandes entrantes associées à des données dans un mode sans état et sans données et utilisant des informations en provenance d'une couche de données de l'architecture DLA, la fonction de routage comprenant :
- une fonction de communication (500a) apte à recevoir une demande initiale associée à des données (R1) concernant un utilisateur particulier, dans laquelle la demande initiale associée à des données est une demande d'autorisation d'utilisateur ;
- une unité logique (500b) apte à identifier une séquence de signalisation de la demande initiale associée à des données, dans laquelle une ou plusieurs demandes subséquentes associées à des données concernant l'utilisateur sont anticipées au sein de ladite séquence de signalisation ; et
- une unité de routage (500c) apte à acheminer la demande initiale associée à des données vers une fonction d'application sélectionnée dans la couche d'application, dans laquelle la demande initiale associée à des données déclenche la fonction d'application sélectionnée afin qu'elle opère temporairement dans un mode avec état, en mettant en mémoire cache des informations utilisées en vue de traiter la demande initiale associée à des données, ce qui inclut la récupération d'informations associées à l'utilisateur à partir d'un magasin de stockage de données (408) ;
dans laquelle la fonction de communication (500a) est en outre apte à recevoir ladite une ou lesdites plusieurs demandes subséquentes associées à des données (RS), lesquelles sont reconnues comme appartenant à ladite séquence de signalisation, et l'unité de routage (500c) est en outre apte à acheminer ladite une ou lesdites plusieurs demandes subséquentes associées à des données vers la fonction d'application sélectionnée, ce qui permet par conséquent à la fonction d'application sélectionnée d'utiliser les informations mises en mémoire cache dans le cadre du traitement de ladite une ou desdites plusieurs demandes subséquentes associées à des données.

6. Fonction de routage selon la revendication 5, dans laquelle, lorsqu'une réponse à la demande initiale associée à des données est reçue en provenance de la fonction d'application sélectionnée, la fonction de communication (500a) est en outre apte à conserver une identité d'hôte de la fonction d'application sélectionnée dans la réponse, lors de l'acheminement de la réponse vers la partie demanderesse, ce qui permet par conséquent à la partie demanderesse d'envoyer une demande subséquente associée à des données directement à la fonction d'application sélectionnée.

7. Fonction de routage selon la revendication 5, dans laquelle l'unité logique (500b) est en outre apte à stocker des informations de session (500d), créées pour la séquence de signalisation, et qui sont associées à l'utilisateur et à la fonction d'application sélectionnée, lors de la réception de la demande initiale associée à des données en provenance d'un premier homologue de la partie demanderesse, et dans laquelle l'unité de routage (500c) est en outre apte à acheminer une demande subséquente associée à des données de la séquence de signalisation, reçue en provenance d'un second homologue de la partie demanderesse ou en provenance dudit premier homologue, vers la fonction d'application sélectionnée, sur la base des informations de session stockées.

8. Fonction de routage selon la revendication 7, dans laquelle l'unité logique (500b) est en outre apte à libérer lesdites informations de session dans la fonction de routage lorsque ladite séquence de signalisation est terminée, interrompue ou a expiré.

9. Procédé, mis en oeuvre par une fonction d'application dans une couche d'application d'une architecture en couches de données, DLA, de gestion de demandes associées à des données, acheminées à partir d'une fonction de routage de l'architecture DLA, la couche d'application comportant de multiples fonctions d'application opérant en vue de traiter des demandes entrantes associées à des données dans un mode sans état et sans données, et utilisant des informations en provenance d'une couche de données de l'architecture DLA, le procédé comprenant les étapes ci-dessous consistant à :
- recevoir (306), en provenance de la fonction de routage, une demande initiale associée à des données concernant un utilisateur particulier et faisant partie d'une séquence de signalisation, dans lequel une ou plusieurs demandes subséquentes associées à des données concernant l'utilisateur sont anticipées au sein de ladite séquence de signalisation, dans lequel la demande initiale associée à des données est une demande d'autorisation d'utilisateur ;
- passer (308) temporairement du mode sans état à un mode avec état en vue de gérer des demandes au sein de ladite séquence de signalisation ;
- récupérer (310), à partir de la couche de données, des informations associées à l'utilisateur utilisées pour traiter (314) la demande initiale associée à des données, ce qui inclut la récupération d'informations associées à l'utilisateur à partir d'un magasin de stockage de données (408) ;
- mettre en mémoire cache (312) au moins certaines des informations récupérées associées à l'utilisateur ;
- recevoir (322), en provenance de la fonction de routage, ladite une ou lesdites plusieurs demandes subséquentes associées à des données reconnues comme appartenant à ladite séquence de signalisation ; et
- utiliser (324a) les informations mises en mémoire cache dans le cadre du traitement (326) de ladite une ou desdites plusieurs demandes subséquentes associées à des données.

10. Procédé selon la revendication 9, dans lequel des informations anticipées associées à l'utilisateur, requises pour traiter une demande associée à des données à venir au sein de ladite séquence de signalisation, sont récupérées à partir de la couche de données et sont mises en mémoire cache au préalable, avant de recevoir la demande associée à des données à venir.

11. Procédé selon la revendication 9 ou 10, dans lequel des informations d'état associées à une session, créées pour la séquence de signalisation, sont mises en mémoire cache, et sont utilisées dans le cadre du traitement de ladite une ou desdites plusieurs demandes subséquentes associées à des données.

12. Procédé selon l'une quelconque des revendications 9 à 11, dans lequel les informations mises en mémoire cache sont mises au rebut (330) dans la fonction d'application, et le mode avec état est passé (332) au mode sans état lorsque ladite séquence de signalisation est terminée, interrompue ou a expiré.

13. Fonction d'application (502) dans une couche d'application d'une architecture en couches de données, DLA, la fonction d'application étant configurée de manière à gérer des demandes associées à des données, acheminées à partir d'une fonction de routage de l'architecture DLA, la couche d'application comportant de multiples fonctions d'application (502A) opérant pour traiter des demandes entrantes associées à des données dans un mode sans état et sans données, et utilisant des informations en provenance d'une couche de données (504) de l'architecture DLA, la fonction d'application comprenant :
- une unité de communication (502a) apte à recevoir, en provenance de la fonction de routage, une demande initiale associée à des données (R1) concernant un utilisateur particulier et faisant partie d'une séquence de signalisation, dans laquelle une ou plusieurs demandes subséquentes associées à des données concernant l'utilisateur sont anticipées au sein de ladite séquence de signalisation, dans laquelle la demande initiale associée à des données est une demande d'autorisation d'utilisateur ; et
- une unité de traitement (502b) apte à passer temporairement du mode sans état à un mode avec état en vue de gérer des demandes au sein de ladite séquence de signalisation, à récupérer, à partir de la couche de données (504), des informations associées à l'utilisateur utilisées pour traiter (314) la demande initiale associée à des données, ce qui inclut la récupération d'informations associées à l'utilisateur à partir d'un magasin de stockage de données (408),
et à mettre en mémoire cache au moins certaines des informations récupérées associées à l'utilisateur, dans une mémoire cache (502c) ;
dans laquelle l'unité de communication (502a) est en outre apte à recevoir, en provenance de la fonction de routage, ladite une ou lesdites plusieurs demandes subséquentes associées à des données (RS) reconnues comme appartenant à ladite séquence de signalisation, et l'unité de traitement (502b) est en outre apte à utiliser les informations mises en mémoire cache en provenance de la mémoire cache (502c) dans le cadre du traitement (326) de ladite une ou desdites plusieurs demandes subséquentes associées à des données.

14. Fonction d'application selon la revendication 13, dans laquelle l'unité de traitement (502b) est en outre apte à récupérer des informations anticipées associées à l'utilisateur, requises pour traiter une demande associée à des données à venir au sein de ladite séquence de signalisation, à partir de la couche de données, et à mettre en mémoire cache au préalable les informations anticipées associées à l'utilisateur avant de recevoir la demande associée à des données à venir.

15. Fonction d'application selon la revendication 13 ou 14, dans laquelle l'unité de traitement (502b) est en outre apte à mettre en mémoire cache des informations d'état associées à une session, créées pour la séquence de signalisation, et à utiliser les informations d'état associées à une session dans le cadre du traitement de ladite une ou desdites plusieurs demandes subséquentes associées à des données.

16. Fonction d'application selon l'une quelconque des revendications 13 à 15, dans
laquelle l'unité de traitement (502b) est en outre apte à mettre au rebut les informations mises en mémoire cache dans la fonction d'application, et à passer du mode avec état au mode sans état lorsque ladite séquence de signalisation est terminée, interrompue ou a expiré.
